# EUROPÄISCHE PATENTSCHRIFT

(11) **EP 2 160 269 B1**
(45) Veröffentlichungstag und Bekanntmachung des Hinweises auf die Patenterteilung: **29.02.2012**
(21) Anmeldenummer: 08761028.3
(22) Anmeldetag: 13.06.2008
(51) Int. Cl.: B23Q 5/58, F16P 3/14

(54) **WERKZEUGMASCHINENÜBERWACHUNGSVORRICHTUNG**
MACHINE TOOL MONITORING DEVICE
DISPOSITIF DE SURVEILLANCE DE MACHINES-OUTILS

(30) Priorität: 15.06.2007 DE 102007027669; 14.01.2008 DE 102008004245; 13.06.2008 DE 102008002431
(43) Veröffentlichungstag der Anmeldung: 10.03.2010
(73) Patentinhaber: Robert Bosch GmbH, 70442 Stuttgart (DE)
(72) Erfinder: VISEL, Benjamin, 71701 Schwieberdingen (DE); STELLMANN, Georg, 71642 Ludwigsburg (DE); JACKISCH, Sebastian, 71638 Ludwigsburg (DE)
(86) Internationale Anmeldenummer: PCT/EP2008/057509
(87) Internationale Veröffentlichungsnummer: WO 2008/152141

(56) Entgegenhaltungen:
- EP-A- 1 422 022
- DE-A1-102007 039 570
- GB-A- 2 207 999
- US-A- 5 436 613
- US-A1- 2006 101 960
- US-A1- 2006 197 020

## Beschreibung

### Stand der Technik

Die Erfindung geht aus von einer Werkzeugmaschinenüberwachungsvorrichtung nach dem Oberbegriff des Anspruchs 1.

Es ist bereits eine Werkzeugmaschinenüberwachungsvorrichtung mit einer Erkennungsvorrichtung zur Materialerkennung bekannt.

Aus der EP 1 422 022 A1 ist ein Kraftwerkzeug, wie beispielsweise eine Tischsäge oder eine Gehrungssäge mit einer Schutzvorrichtung zur Verhinderung, einer ungewollten Berührung mit dem Schneidwerkzeug, bekannt. Die Vorrichtung der EP 1 422 022 A1 weist dazu Mittel zum Erfassen der Position von Objekten auf, die nicht das Werkstück sind, die sich jedoch innerhalb eines ersten vorbestimmten Gebietes in der Umgebung des Schneidwerkzeugs bewegen. Das Erfassungsmittel weist ein erstes Radar zum Übertragen von Funkquellen in Richtung auf das vorbestimmte Gebiet und zum Empfangen von davon reflektierten Wellen auf. Ein Prozessor der Vorrichtung bestimmt sowohl den Ort dieser Objekte, als auch deren Annäherungs-Geschwindigkeit auf das Schneidwerkzeug hin. Übertrifft die erfasste Geschwindigkeit des detektierten Objektes einen vorgegebenen Grenzwert, so wird der Motor des Kraftwerkeuges gestoppt. Vorzugsweise werden in einer ersten Ausführungsform Einzelfrequenzradiowellen aus einem Bereich von 3 bis 30 GHz, insbesondere Signale bei 10, 5 GHz zur Detektion benutzt.

Die US 2006/0101960 A1 offenbart einen optischen Annäherungssensor für ein Elektrowerkzeug, wie beispielsweise eine Standkreissäge. Die US 2006/0101960 A1 schlägt dazu eine Lichtquelle im Infrarot-Bereich, eine Nah-Infrarot Lichtquelle, eine Kombination von Nah-Infrarot Lichtquelle und Infrarot-Lichtquelle, eine Lichtquelle im sichtbaren Bereich oder auch eine Kombination von Nah-Infrarot Lichtquelle und einer Lichtquelle im sichtbaren Bereich vor. Darüber hinaus schlägt die US 2006/0101960 A1 einen Empfänger für den Sensor in Form eines diffus reflektierenden Nah-Infrarot Detektor oder auch einen reflektiven Infrarot-Detektor vor.

### Vorteile der Erfindung

Die Erfindung geht aus von einer Werkzeugmaschinenüberwachungsvorrichtung bzw. -einrichtung mit einer Erkennungsvorrichtung, die zur Anwesenheitserkennung einer Materialart, insbesondere von menschlichem Gewebe, in einem Werkzeugsmaschinenarbeitsbereich mittels einer spektralen Auswertung einer Strahlung vorgesehen ist.

Es wird vorgeschlagen, dass die Erkennungsvorrichtung eine Sensoreinheit mit wenigstens einem Empfindlichkeitsbereich zur Strahlungserfassung in einem Wellenlängenbereich aufweist, der zumindest teilweise im Infrarotspektrum angeordnet ist. Unter einem "Werkzeugmaschinenarbeitsbereich" soll insbesondere ein Bereich einer Werkzeugmaschine in der direkten Umgebung eines Werkzeugs verstanden werden. Unter einem Bereich in der "direkten" Umgebung des Werkzeugs soll insbesondere ein Bereich verstanden werden, bei dem jeder Punkt des Bereichs einen kleinsten Abstand zum Werkzeug aufweist, der maximal 10 cm, bevorzugt maximal 5 cm und besonders bevorzugt maximal 2 cm beträgt. Des Weiteren soll unter einer "Strahlung" in diesem Zusammenhang insbesondere eine elektromagnetische Strahlung verstanden werden. Unter einem "Spektrum" einer von der Sensoreinheit erfassten Strahlung soll insbesondere eine Verteilung einer Strahlungskenngröße, insbesondere der Intensität der Strahlung in Abhängigkeit von der Wellenlänge, der Frequenz und/oder der Zeit, verstanden werden. Unter einem "Wellenlängenbereich" soll ein spektraler Ausschnitt des elektromagnetischen Spektrums verstanden werden, der durch Angabe zweier Größen definiert wird: Die "Wellenlänge" des Wellenlängenbereichs bezeichnet dessen zentrale Wellenlänge, während unter der "Bandbreite" des Wellenlängenbereichs dessen Halbwertsbreite (auch mit FWHM bezeichnet) zu verstehen ist. Ferner soll unter einer "spektralen Auswertung" einer Strahlung insbesondere eine Signalauswertung verstanden werden, bei der ein Auswerteergebnis durch Erfassung und Verarbeitung eines Charakteristikums eines Spektrums der Strahlung gewonnen wird, insbesondere einer über einen Wellenlängenbereich integrierten Signalintensität. Durch die erfindungsgemäße Ausgestaltung kann eine zuverlässige und schnelle Erkennung einer Anwendungssituation bei einer Werkzeugmaschine kostengünstig erreicht werden. Des Weiteren soll unter einem "menschlichen Gewebe" insbesondere ein Körperteil eines insbesondere unbekleideten menschlichen Organismus verstanden werden, wie beispielsweise Haut, Fingernägel und/oder tiefer liegende Gewebeschichten.

Um eine hohe Sicherheit bei der Anwendung einer Werkzeugmaschine zu erreichen, weist die Erkennungsvorrichtung vorzugsweise ein Auswertemittel zur Auswertung einer von der Sensoreinheit erfassten Strahlung auf, das anhand der Strahlung zur Anwesenheitserkennung von menschlichem Gewebe im Werkzeugmaschinenarbeitsbereich vorgesehen ist.

In einer bevorzugten Ausführung der Erfindung wird vorgeschlagen, dass die Erkennungsvorrichtung zur Anwesenheitserkennung mittels der Auswertung eines Reflektionsspektrums einer auf ein Untersuchungsobjekt reflektierten Strahlung vorgesehen ist, wodurch eine effektive, auf einer Kontrasterfassung basierten Erkennung der Materialart erreicht werden kann.

Es kann eine besonders zuverlässige Erkennung erreicht werden, wenn der Wellenlängenbereich zumindest teilweise ein nahmittlerer Infrarotbereich, insbesondere ein Bereich zwischen ca. 700 nm und 3000 nm, ist. Es kann dadurch ein Empfmdlichkeitsbereich bereitgestellt werden, welcher gezielt auf die Erfassung und die Auswertung eines Reflektionsspektrums abgestimmt ist. Unter einem "nahmittleren Infrarotbereich" soll in diesem Zusammenhang insbesondere ein Wellenlängenintervall des Infrarotspektrums verstanden werden, welches unterhalb der Wellenlänge 15 µm angeordnet ist. Es kann ferner ein hoher Kontrast zwischen menschlichem Gewebe und Werkstoff erreicht werden, wenn der Empfindlichkeitsbereich zur Erfassung einer Strahlung in einem Wellenlängenintervall des Infrarotspektrums unterhalb der Wellenlänge 8 µm vorgesehen ist. Insbesondere ist von Vorteil, wenn der Wellenlängenbereich ein naher Infrarotbereich ist. Unter einem "nahen Infrarotbereich" soll in diesem Zusammenhang insbesondere ein Wellenlängenintervall des Infrarotspektrums verstanden werden, welches unterhalb der Wellenlänge 3 µm angeordnet ist, wie insbesondere ein Wellenlängenintervall im IR-A und IR-B Bereich. Der Wellenlängenbereich kann ferner teilweise im sichtbaren und/oder dem ultravioletten Bereich des elektromagnetischen Spektrums angeordnet sein.

Um mit der Sensoreinheit Strahlung ausschließlich im Wellenlängenbereich zu erfassen, ist es unter Umständen vorteilhaft, mit einem, der Sensoreinheit vorgelagerten, optischen Filter für eine spektrale Beschränkung der Empfindlichkeit der Sensoreinheit auf den Wellenlängenbereich zu sorgen. Typischerweise entspricht die spektrale Charakteristik des verwendeten optischen Filters der eines Bandpasses, jedoch können andere spektrale Filtercharakteristiken im Einzelfall sinnvoll sein.

Es kann ein Auswertesignal mit einer hohen Signalintensität erreicht werden, wenn die Erkennungsvorrichtung eine Sendeeinheit aufweist, die dazu vorgesehen ist, eine Strahlung mit zumindest einem Strahlungsanteil im Wellenlängenbereich zu senden.

In einer weiteren vorteilhaften Ausbildung der Erfindung, insbesondere zur Unterscheidung von menschlichem Gewebe und Werkstoffen geeignet ist, wird vorgeschlagen, dass die Sendeeinheit dazu vorgesehen ist, eine Strahlung im Wellenlängenbereich und in zumindest einem weiteren Wellenlängenbereich zu senden. Als besonders vorteilhaft stellt sich hierbei die Verwendung einer Sendeeinheit dar, deren Strahlung gepulst ist, insbesondere so, dass sich die zeitliche Charakteristik der gepulsten Strahlung in beiden Wellenlängenbereichen unterscheidet. Der Vorteil dieser Ausführung ist die Möglichkeit, mit Hilfe des Auswertemittels die von der Sensoreinheit empfangene Strahlung nach den, von der Sendeeinheit abgestrahlten, Wellenlängenbereichen zu unterscheiden und somit die spektrale Charakteristik der bestrahlten Materialart in den beiden Wellenlängenbereichen separat zu erfassen.

Des Weiteren wird vorgeschlagen, dass die Sensoreinheit dazu vorgesehen ist, Strahlung in mehreren Wellenlängenbereichen zu senden. Es kann hierdurch vorteilhaft eine erhöhte Sicherheit bei einer Erkennung von Gewebe, insbesondere menschlichem Gewebe, erreicht werden, und zwar indem die mehreren Wellenlängenbereiche und/oder Wellenlängen für die Erkennung herangezogen werden können. Zudem können vorteilhaft unterschiedliche Verhältnisse, insbesondere Kontrastverhältnisse, einer sensierten Strahlung einer Sensoreinheit und/oder der Erkennungsvorrichtung der einzelnen Wellenlängen und/oder Wellenlängenbereiche zueinander gebildet werden und dabei eine insbesondere redundante Erkennung einer Materialart bzw. einem menschlichen Gewebe erreicht werden, wie dies beispielsweise als Unterscheidungskriterium aufgrund einer geringen Unterscheidbarkeit der reflektierten Spektren zu einer Unterscheidung von menschlichem Gewebe und einem feuchten Werkstück erforderlich sein kann. Insbesondere kann hierbei zudem ein breiter spektraler Bereich abgedeckt werden, mittels dessen eine Unterscheidung von möglichst vielen Materialarten von einem menschlichen Gewebe erreicht werden kann.

In der Ausführung ist die von der Sendeeinheit ausgesandte Strahlung "gepulst", darunter ist zu verstehen, dass die ausgesandte Strahlung zeitlich regelmäßig moduliert wird. Unter Berücksichtigung der Charakteristik der zeitlichen Modulation der von der Sendeeinheit ausgesandten Strahlung ist es mit Hilfe des Auswertemittels möglich, die mit der Sensoreinheit empfangene Strahlung eindeutig von weiterer, in der Umgebung vorhandener, elektromagnetischer Strahlung zu unterscheiden, so dass das Signal-Rausch-Verhältnis deutlich erhöht werden kann. Ein weiterer großer Vorteil dieser Ausführung ist, dass auf optische Filter zur Begrenzung des von der Sensoreinheit empfangenen Wellenlängenbereichs üblicherweise verzichtet werden kann.

Ferner wird vorgeschlagen, dass die Sendeeinheit dazu vorgesehen ist, Strahlung unterschiedlicher Wellenlängen gepulst, insbesondere mit jeweils unterschiedlicher Pulsfrequenz, zu senden. In diesem Zusammenhang soll unter einer "Pulsfrequenz" insbesondere eine Frequenz verstanden werden, mit der eine Pulsung eines Signals, insbesondere eines auszusendenden Signals, erfolgt. Es kann hierbei eine vorteilhafte Unterscheidung der einzelnen Wellenlängenbereiche und/oder der einzelnen Wellenlängen des sensierten Spektrums mit Hilfe des Auswertemittels erreicht werden. Zudem kann die Werkzeugmaschinenüberwachungsvorrichtung besonders kostengünstig ausgestaltet werden, indem auf zusätzliche optische Filter zur Unterscheidung der sensierten Spektren in der Regel verzichtet werden kann. Die Pulsfrequenz kann vorteilhaft einen Wert zwischen 25 Hz und 1 GHz annehmen. Besonders vorteilhaft unterscheiden sich die Pulsfrequenzen der unterschiedlichen Wellenlängen und/oder Wellenlängenbereiche um jeweils einen Faktor zwei oder ein Vielfaches davon, wie beispielsweise Pulsfrequenzen von 10 kHz, 20 kHz und 40 kHz bei genau drei Wellenlängen und/oder Wellenlängenbereichen.

Es wird weiterhin vorgeschlagen, dass die Strahlung des zumindest einem weiteren Wellenlängenbereichs im sichtbaren Spektralbereich und/oder im ultravioletten Spektralbereich liegt. Es kann hierbei vorteilhaft der Spektralbereich zur Detektion bzw. zur Erkennung einer Materialart und/oder menschlichem Gewebe vorteilhaft vergrößert werden und dabei können zusätzliche charakteristische Wellenlängenbereiche für eine Unterscheidung bzw. Erkennung der Materialart und/oder des menschlichen Gewebes erfasst werden.

Außerdem wird vorgeschlagen, dass die Werkzeugmaschinenüberwachungsvorrichtung eine Optikeinheit aufweist, die dazu vorgesehen ist, einen Reaktionsbereich der Erkennungsvorrichtung festzulegen. Unter einem "Reaktionsbereich" der Erkennungsvorrichtung soll insbesondere ein Raumbereich verstanden werden, der einem von der Erkennungsvorrichtung vornehmbaren Vorgang zugeordnet ist, welcher bei einem Vorhandensein eines Körpers der Materialart in diesem Raumbereich ausgelöst wird. Der Reaktionsbereich entspricht vorzugsweise zumindest einem Teilbereich des Werkzeugmaschinenarbeitsbereichs. Alternativ oder zusätzlich kann ein Reaktionsbereich vorgesehen sein, der sich vom Werkzeugmaschinenarbeitsbereich unterscheidet. Beispielsweise kann dieser Reaktionsbereich zu einer Warnungsfunktion der Werkzeugmaschinenüberwachungsvorrichtung vorgesehen sein. Vorteilhafterweise steht die Erkennungsvorrichtung mit einer Aktorikeinheit in Wirkverbindung, wobei das Vorhandensein des Körpers der Materialart im Reaktionsbereich einen Betrieb der Aktorikeinheit, wie z.B. zum Stoppen einer Werkzeugmaschinenantriebseinheit, auslöst. Die Optikeinheit kann einem im Strahlengang der Sensoreinheit geschalteten optischen System entsprechen. Weist die Werkzeugmaschinenüberwachungsvorrichtung eine Sendeeinheit zum Senden einer Strahlung auf, kann die Optikeinheit alternativ oder zusätzlich einem im Strahlengang der Sendeeinheit geschalteten optischen System entsprechen. Durch die Optikeinheit kann eine sichere und komfortable Anwendung einer Werkzeugmaschine erreicht werden, indem eine Reaktion der Erkennungsvorrichtung auf einen abgegrenzten Bereich beschränkt werden kann.

Vorteilhafterweise weist die Sensoreinheit zumindest einen weiteren Empfindlichkeitsbereich auf, der zur Strahlungserfassung in einem weiteren Wellenlängenbereich vorgesehen ist, wodurch eine weiter gesteigerte Sicherheit in der Erkennung der Materialart erreicht werden kann. Die Wellenlängenbereiche können sich überlappen.

In diesem Zusammenhang wird vorgeschlagen, dass die Erkennungsvorrichtung ein Auswertemittel aufweist, das dazu vorgesehen ist, das Vorhandensein der Materialart anhand eines Verhältnisses von zumindest zwei Strahlungskenngrößen zu erkennen, die jeweils einem Strahlungsanteil in einem unterschiedlichen Wellenlängenbereich zugeordnet sind. Dadurch kann vorteilhaft eine schnelle Erkennung erreicht werden. Insbesondere kann auf die Berücksichtigung einer Referenzstrahlung verzichtet werden. Unter einer "Strahlungskenngröße" soll insbesondere eine Kenngröße verstanden werden, die anhand einer auf die Sensoreinheit einfallenden Strahlung erfasst wird. Diese Kenngröße kann insbesondere eine elektrische Kenngröße sein.

In einer bevorzugten Ausführung der Erfindung wird vorgeschlagen, dass der Wellenlängenbereich schmalbandig ausgebildet ist. Unter einem "schmalbandigen Wellenlängenbereich" soll in diesem Zusammenhang insbesondere ein Wellenlängenbereich verstanden werden, der eine Bandbreite von maximal 200 nm, vorteilhaft maximal 50 nm, bevorzugt maximal 20 nm und besonders bevorzugt maximal 10 nm aufweist. Es kann dadurch auf eine konstruktionsaufwendige Filterung einer erfassten Strahlung vorteilhaft verzichtet werden. Grundsätzlich sind auch Bandbreiten in einem Bereich von bis zu 1 µm möglich.

Der Bedienkomfort kann ferner vorteilhaft erhöht werden, wenn die Werkzeugmaschinenüberwachungsvorrichtung eine Markierungseinheit aufweist, die dazu vorgesehen ist, den Reaktionsbereich zu markieren. In einer besonders vorteilhaften Ausführung besteht die Markierungseinrichtung aus einer optischen Einheit zur Bestrahlung des Reaktionsbereichs mit sichtbarem Licht.

Zur Erweiterung des Reaktionsbereichs und/oder um eine zuverlässigere Unterscheidung von menschlichem Gewebe und Material zu erreichen, sind Ausführungen der Erfindung vorteilhaft, bei denen die Erfassungseinheit mehr als eine Sende- und/oder mehr als eine Empfangseinheit aufweist, die untereinander räumlich durchaus getrennt verbaut werden können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, gemäß der Ansprüchen 1-13.

Es zeigen:
- Fig. 1: eine Seitenansicht einer Tischkreissäge mit einer Erkennungsvorrichtung,
- Fig. 2: die Tischkreissäge in einer Draufsicht von oben mit einem Reaktionsbereich der Erkennungsvorrichtung,
- Fig. 3: eine alternative Anordnung einer Sensoreinheit der Erkennungsvorrichtung an der Tischkreissäge in einer perspektivischen Darstellung,
- Fig. 4: eine schematische Darstellung der Erkennungsvorrichtung mit einer Sendeeinheit zum Senden einer Strahlung in den Reaktionsbereich, einer Sensoreinheit und eines Untersuchungsobjekts,
- Fig. 5: ein Sendemittel der Sendeeinheit und ein Sensormittel der Sensoreinheit in einer Frontansicht,
- Fig. 6: eine Darstellung von Empfindlichkeitsbereichen der Sensormittel,
- Fig. 7: eine Darstellung von Wellenlängenbereichen der Sendemittel,
- Fig. 8: eine Darstellung einer gepulsten, von einem Sendemittel ausgesandten Strahlung,
- Fig. 9: eine Darstellung eines von der Sensoreinheit empfangenen Spektrums,
- Fig. 10: eine interne Schaltung der Erkennungsvorrichtung und
- Fig. 11: eine in der Erkennungsvorrichtung gespeicherte Datenbank.

### Beschreibung der Ausführungsbeispiele

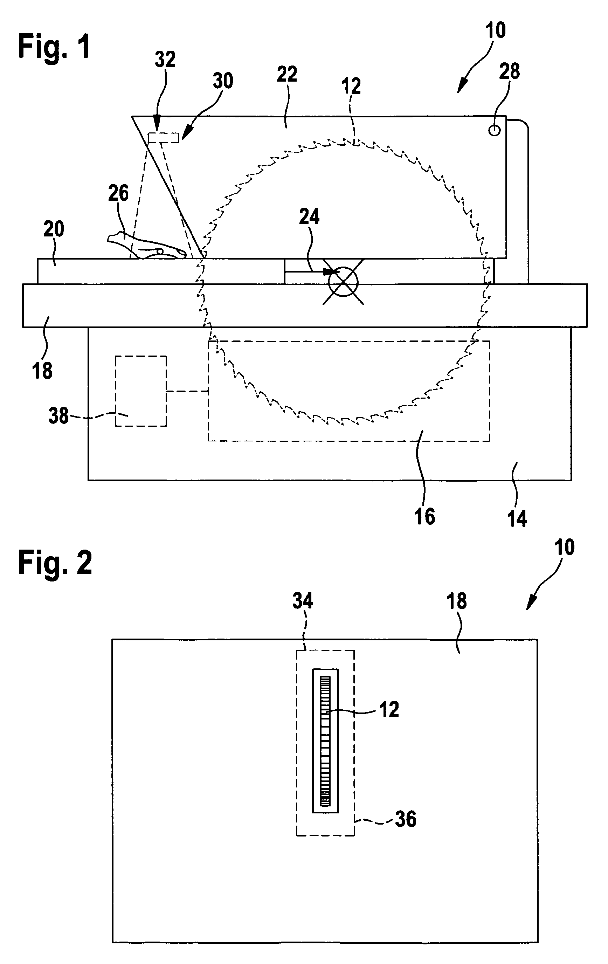

Figur 1 zeigt eine als Tischkreissäge ausgebildete Werkzeugmaschine 10 in einer Seitenansicht. Die Werkzeugmaschine 10 weist ein als scheibenförmiges Sägeblatt ausgebildetes Werkzeug 12 auf, das in einem Sägebetrieb mittels einer in einem Antriebsgehäuse 14 angeordneten und als Elektromotor ausgebildeten Antriebseinheit 16 rotatorisch angetrieben wird. Auf dem Antriebsgehäuse 14 abgestützt ist ein Sägetisch 18 angeordnet, auf welchem ein zu bearbeitendes Werkstück 20 aufgelegt werden kann. Zum Schutz eines Bedieners umfasst die Werkzeugmaschine 10 eine Schutzhaube 22, die in einem unbetriebenen Zustand der Werkzeugmaschine 10 den aus dem Sägetisch 18 herausragenden Teil des Werkzeugs 12 vollständig umschließt. Zur Durchführung einer Bearbeitung des Werkstücks 20 wird dieses auf bekannte Weise in einer Arbeitsrichtung 24 in Richtung auf das Werkzeug 12 durch einen Bediener hinbewegt, von dem eine Hand 26 in der Figur 1 schematisch dargestellt ist. Hierbei wird die Schutzhaube 22, die um eine Drehachse 28 drehbar gelagert ist, durch das Werkstück 20 nach oben geschwenkt, wodurch die Werkzeugschneidkante freigegeben wird.

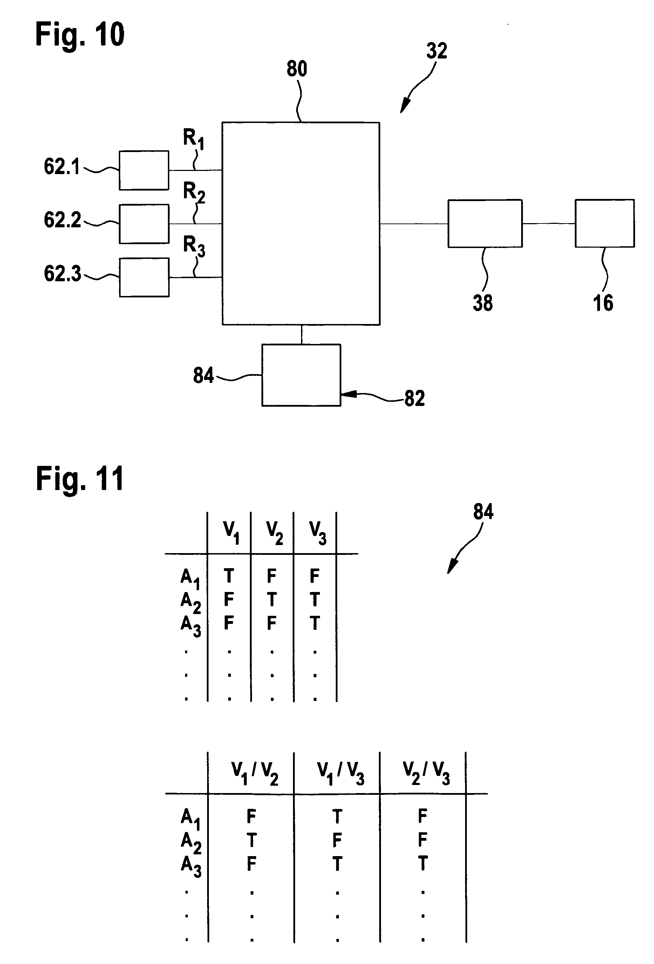

Zur Erhöhung der Bedienersicherheit ist die Werkzeugmaschine 10 mit einer Werkzeugmaschinenüberwachungsvorrichtung 30 versehen. Die Werkzeugmaschinenüberwachungsvorrichtung 30 weist eine Erkennungsvorrichtung 32 auf, die zur Anwesenheitserkennung von menschlichem Gewebe in einem Werkzeugmaschinenarbeitsbereich 34 der Werkzeugmaschine 10 mittels einer spektralen Auswertung einer Strahlung vorgesehen ist. Der Werkzeugmaschinenarbeitsbereich 34 ist in Figur 2 in einer Draufsicht der Werkzeugmaschine 10 von oben zu sehen. Der Übersichtlichkeit halber wurde in Figur 2 auf die Darstellung der Schutzhaube 22 verzichtet. Die Erkennungsvorrichtung 32 weist einen Reaktionsbereich 36 auf, welcher der Betätigung einer mit der Antriebseinheit 16 gekoppelten Aktorikeinheit 38 zugeordnet ist, die mit der Erkennungsvorrichtung 32 in Wirkverbindung steht (siehe auch Figur 10). Wird durch die Erkennungsvorrichtung 32 das Vorhandensein von menschlichem Gewebe im Reaktionsbereich 36 erkannt, so wird ein Betätigungssignal zu der Aktorikeinheit 38 übertragen, die anhand dieses Betätigungssignals ein Stoppen der Antriebseinheit 16 betätigt. Der Reaktionsbereich 36 entspricht im Wesentlichen dem Werkzeugmaschinenarbeitsbereich 34, der in Arbeitsrichtung 24 vor, neben und auch hinter dem Werkzeug 12 angeordnet ist. Im dargestellten Beispiel ist die Erkennungsvorrichtung 32 in der Schutzhaube 22, und zwar im in Arbeitsrichtung 24 vor dem Werkzeug 12 angeordneten vorderen Bereich der Schutzhaube 22 angeordnet.

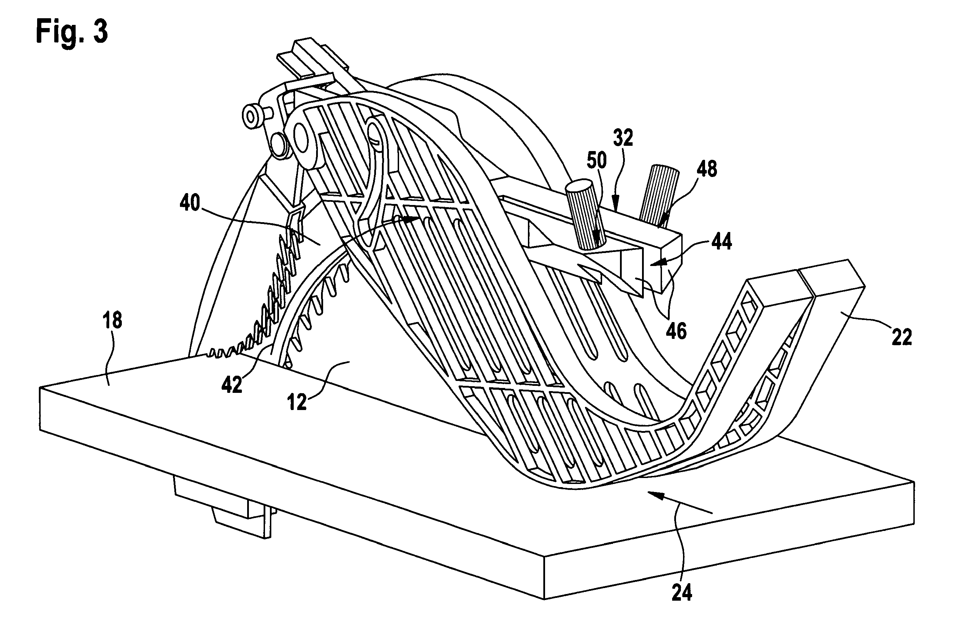

Figur 3 zeigt eine zu den Figuren 1 und 2 alternative Anordnung der Erkennungsvorrichtung 32 innerhalb der Tischkreissäge. Die Tischkreissäge weist einen Spaltkeil 40 auf, der in Umfangsrichtung 42 um das Werkzeug 12 angeordnet ist. Die Schutzhaube 22 weist einen Ausleger 44 auf, an dessen vorderem, entgegen der Arbeitsrichtung 24 weisenden Ende die Erkennungsvorrichtung 32 angeordnet ist. Der Ausleger 44 weist zwei stegförmige Verlängerungen 46 auf, an denen die Erkennungsvorrichtung 32 angeordnet ist, wobei eine Sendeeinheit 48 und eine Sensoreinheit 50 in jeweils einem der stegförmigen Verlängerungen 46 angeordnet sind und somit zudem räumlich voneinander getrennt innerhalb des Spaltkeils 40 angeordnet sind.

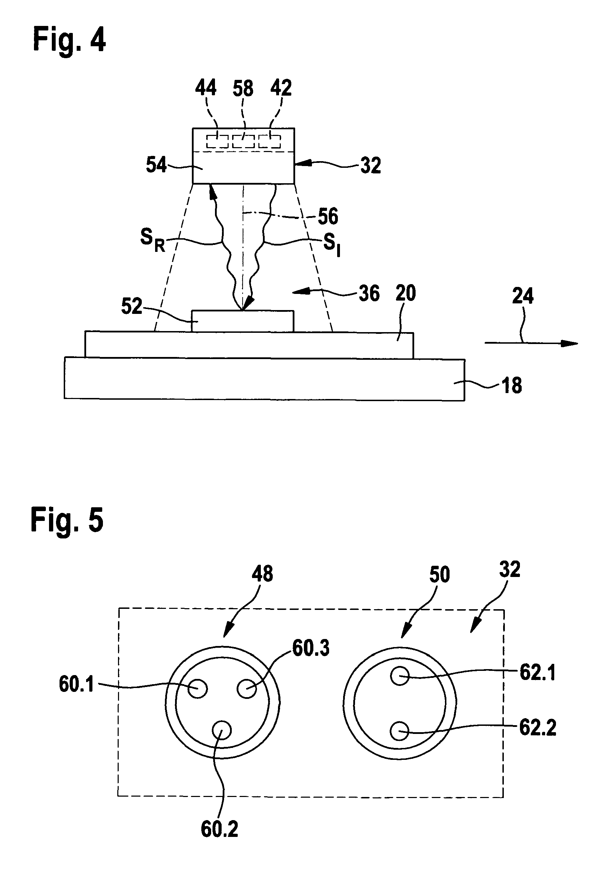

Das Funktionsprinzip der Erkennungsvorrichtung 32 wird anhand der Figur 4 näher beschrieben. Es sind der Sägetisch 18, das Werkstück 20 und die Erkennungsvorrichtung 32 in einer schematischen Ansicht dargestellt. Der Übersichtlichkeit halber wird auf die Darstellung des Werkzeugs 12 und der Schutzhaube 22 verzichtet. Auf dem Werkstück 20 im Reaktionsbereich 36 ist ein Untersuchungsobjekt 52 angeordnet. Dieses Untersuchungsobjekt 52 kann insbesondere die Hand 26 sein. Die Erkennungsvorrichtung 32 weist die in der Figur 4 schematisch dargestellte Sendeeinheit 48 auf, die im Betrieb eine Strahlung S_{I} in den Reaktionsbereich 36 sendet. Diese Strahlung S_{I} wird auf das Untersuchungsobjekt 52 reflektiert und als Strahlung S_{R} von einer in der Figur 4 schematisch dargestellten Sensoreinheit 50 der Erkennungsvorrichtung 32 empfangen. Der Sendeeinheit 48 und der Sensoreinheit 50 ist eine Optikeinheit 54 vorgeschaltet. Die Optikeinheit 54 weist eine Linseneinheit auf (nicht dargestellt), die die Grenzen des Reaktionsbereichs 36 festlegt, in welchen die Strahlungen S_{I} gesendet werden. Die Linseneinheit ist ferner dazu ausgelegt, die Empfindlichkeit der Sensoreinheit 50 auf im Reaktionsbereich 36 reflektierte Strahlung S_{R} zu begrenzen. Die Optikeinheit 54 weist eine optische Achse 56 auf. Die Werkzeugmaschinenüberwachungsvorrichtung 30 weist ferner eine Markiereinheit 58 auf, die in Figur 3 schematisch dargestellt ist und im Betrieb der Erkennungsvorrichtung 32 den Reaktionsbereich 36 der Erkennungsvorrichtung 32 durch eine Projektion auf den Sägetisch 18 für einen Bediener sichtbar, beispielsweise durch farbiges Licht, markiert. Beispielsweise kann die Markiereinheit 58 als Lasermarkierer ausgebildet sein. Alternativ oder zusätzlich kann die Markierung des Reaktionsbereichs 36 von der Sendeeinheit 48 durchgeführt werden, die einen Strahlungsanteil im sichtbaren Bereich erzeugt.

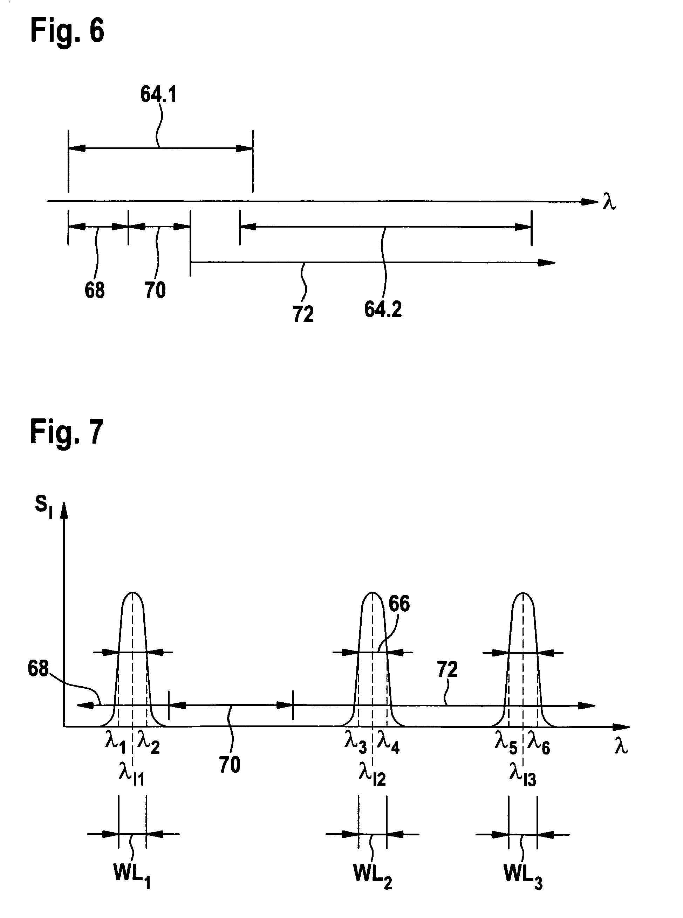

Figur 5 zeigt die Sendeeinheit 48 und die Sensoreinheit 50 der Erkennungsvorrichtung 32 in einer Frontansicht, in welcher die optische Achse 56 die Zeichnungsebene durchschneidet. Die Sendeeinheit 48 weist drei Sendemittel 60.1, 60.2, 60.3 auf, die jeweils von einer LED gebildet sind. Die Sensoreinheit 50 weist zwei Sensormittel 62.1, 62.2 auf, die unterschiedliche Empfindlichkeitsbereiche 64.1, 64.2 aufweisen (Figur 6), wobei sich die Empfmdlichkeitsbereiche 64.1, 64.2 zumindest teilweise überlappen können. Die Sensormittel 62.1, 62.2 sind jeweils von einer Photodiode ausgebildet. Grundsätzlich ist es auch denkbar, dass die Sensoreinheit 50 ein Sensormittel aufweist, das einen gesamten, von den Sendemitteln 60.1, 60.2, 60.3 ausgesandten Wellenlängenbereich abdeckt bzw. erfasst.

Die Sendemittel 60.1, 60.2, 60.3 sind jeweils zu einem Aussenden einer Strahlung S_{I} mit einer zentralen Wellenlänge λ_{I1}, λ_{I2}, λ_{I3} in einem schmalbandigen Wellenlängenbereich WL₁=[λ₁, λ₂], WL₂=[λ₃, λ₄], WL₃=[λ₅, λ₆] vorgesehen, wobei sich die einzelnen Wellenlängenbereiche WL₁, WL₂, WL₃ voneinander unterscheiden. Die schmalbandigen Wellenlängenbereiche WL₁, WL₂, WL₃ weisen eine Bandbreite 66 von ca. 50 nm auf. Die Bandbreiten 66 der einzelnen Wellenlängenbereiche WL₁, WL₂, WL₃ können zudem auch unterschiedlich ausgebildet sein. Alternativ können die Sendemittel 60.1, 60.2, 60.3 auch von einem Laser, einer Leuchtstoffröhre und/oder weiterer, dem Fachmann als sinnvoll erscheinender Sendemittel 60 gebildet sein. Zudem kann die Sendeeinheit 48 ein Sendemittel 60 aufweisen, das zu einem Aussenden einer Strahlung in den unterschiedlichen Wellenlängen WL₁, WL₂, WL₃ vorgesehen ist. Die Sendeeinheit 48 ist dazu vorgesehen, Strahlung in drei Wellenlängenbereichen WL₁, WL₂, WL₃, insbesondere mit genau drei Wellenlängen λ_{I1}, λ_{I2}, λ_{I3} auszusenden (Figur 7). Die Sendeinheit 48 ist ferner dazu vorgesehen, eine Strahlung S_{I} gepulst in den Wellenlängenbereichen WL₁ bis WL₃ zu senden. Zumindest zwei der Wellenlängenbereiche WL₁, WL₂, WL₃ sind im Infrarotspektrum 72 angeordnet. Insbesondere ist ein oder sind zwei oder drei der Wellenlängenbereiche WL₁, WL₂, WL₃ jeweils ein Bereich des nahen Infrarotspektrums IR-A mit den Grenzwerten [700 nm, 1400 nm]. Alternativ oder zusätzlich können Wellenlängenbereiche in den Infrarotbereichen IR-B (1,4 - 3 µm) und IR-C (3 - 15 µm) gewählt werden. Die Sendeeinheit 48 mit dem Sendemittel 60.1, 60.2, 60.3 erzeugt eine Strahlung S_{I}, die die in Figur 7 gezeigten Wellenlängenbereiche WL₁ umfasst. Ferner kann einer der Wellenlängenbereiche WL₁ bzw. eine der zentralen Wellenlängen λ_{I1} in einem sichtbaren Spektralbereich 70 bzw. im ultravioletten Spektralbereich 68 liegen.

Die Wellenlängenbereiche WL₁, WL₂, WL₃ der Sendemittel 60.1, 60.2, 60.3 können sich in unterschiedlichen Ausgestaltungen der Werkzeugmaschinenüberwachungsvorrichtung 30 unterscheiden. Soll nur eine Unterscheidung von einem trockenen Werkstück 20 und einem menschlichen Gewebe erfolgen, sind Wellenlängen λ_{I1}, λ_{I2}, λ_{I3} mit Werten von λ_{I1}=450 nm, λ_{I2}=740 nm und λ_{I3}=1450 nm oder auch λ_{I1}=740 nm, λ_{I2}=840 nm und λ_{I3}=1550 nm vorteilhaft. Zudem ist es auch denkbar, dass nur zwei der Sendemittel 60.1, 60.2, 60.3 zu einer Unterscheidung zwischen einem trockenen Werkstück 20 und menschlichem Gewebe in Betracht gezogen werden, wie beispielsweise Wellenlängen λ_{I1}, λ_{I2} von λ_{I1}=740 nm und λ_{I2}=1450 nm, λ_{I1}=740 nm und λ_{I2}=1550 nm oder auch λ_{I}=1075 nm und λ_{I2}=1375 nm. Zu einer Unterscheidung von einem feuchten und/oder trockenen Werkstück 20 und menschlichem Gewebe können die Wellenlängen λ_{I1}, λ_{I2}, λ_{I3} Werte von λ_{I1}=375 nm, λ_{I2}=740 nm und λ_{I3}=1550 nm oder auch λ_{I1}=375 nm, λ_{I2}=1075 nm und λ_{I3}=1375 nm annehmen. Zudem kann es vorteilhaft sein, für die Zuverlässigkeit der Unterscheidung von menschlichem Gewebe und Werkstücken 20 vier Wellenlängenbereiche WL₁, WL₂, WL₃, WL₄ bzw. vier zentrale Wellenlängen λ_{I1}, λ_{I2}, λ_{I3}, λ_{I4} zu verwenden bzw. auszusenden. Hierbei bieten sich besonders die zentralen Wellenlängen λ_{I1}, λ_{I2}, λ_{I3}, λ_{I4} von λ_{I1}=375 nm, λ_{I2}=740 nm, λ_{I3}=1550 nm und eine vierte zentrale Wellenlänge in einem Bereich zwischen 400 nm und 600 nm, wie beispielsweise λ_{I4}=470 nm oder λ_{I4}=525 nm an. Grundsätzlich ist jede weitere dem Fachmann als sinnvoll erscheinende Wellenlängenkombination, die sich zu einer Unterscheidung von Materialarten im beschriebenen Spektralbereich eignet, möglich.

Die beiden Sensormittel 62.1, 62.1 weisen jeweils einen unterschiedlichen Empfindlichkeitsbereich 64.1, 64.2 auf (Figur 6), wobei die beiden Empfindlichkeitsbereiche 64.1, 64.2 zu einer Strahlungserfassung in den gesamten, von der Sendeeinheit 48 ausgesandten Wellenlängenbereichen WL₁, WL₂, WL₃ vorgesehen sind. Die Sensoreinheit 50 kann zu einer schmalbandigen Filterung der erfassten Strahlung S_{R} zusätzlich zu den Sensormitteln 62.1, 62.2 mit einem System von Filterbauteilen versehen sein, das den Sensormitteln 62.1, 62.2 vorgeschaltet ist. Alternativ oder zusätzlich zu Photodioden können die Sensormittel 62.1, 62.2 als Felder von photoempfindlichen Elementen ausgeführt sein.

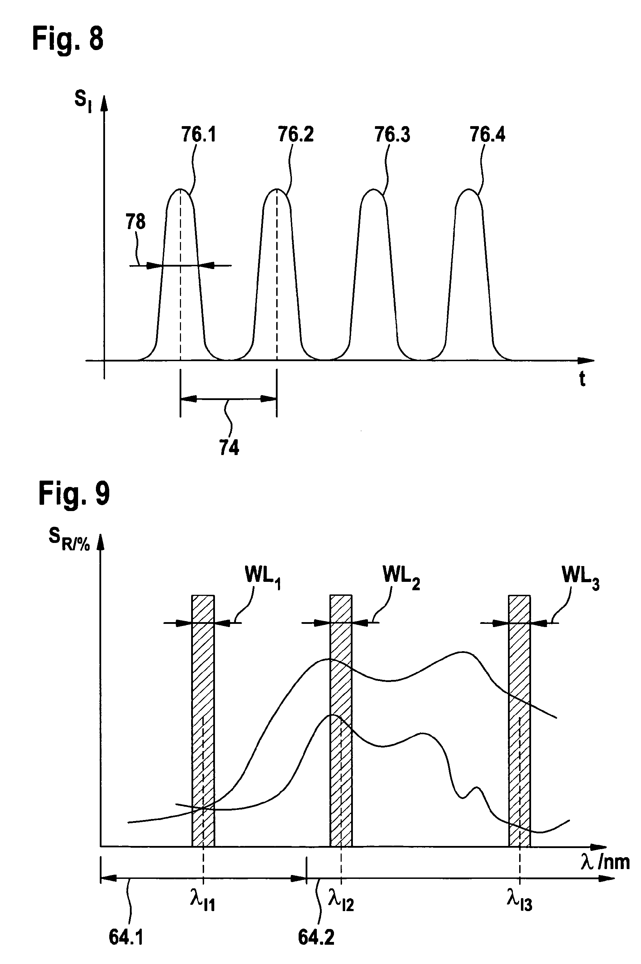

Die Sendemittel 60.1, 60.2, 60.3 senden zudem eine gepulste, insbesondere eine regelmäßig gepulste, Strahlung S_{I} bzw. eine Strahlung S_{I} mit einer variablen Intensität für die jeweiligen Wellenlängenbereiche WL₁, WL₂, WL₃ im Reaktionsbereich 36 aus (Figur 8), so dass innerhalb der Sensoreinheit 50 eine Unterscheidung der von den einzelnen Sendemitteln 60.1, 60.2, 60.3 ausgesandten Strahlung S_{I} und von dem menschlichen Gewebe und/oder dem Werkstück 20 reflektierten Strahlung S_{R} erreicht werden kann. Pulsfrequenzen 74 von Pulsen 76.1, 76.2, 76.3, 76.4 für die einzelnen Wellenlängenbereiche WL₁, WL₂, WL₃ bzw. Wellenlängen λ_{I1}, λ_{I2}, λ_{I3} der Sendemittel 60.1, 60.2, 60.3 sind hierbei unterschiedlich zueinander ausgebildet. Eine zeitliche Charakteristik der von den einzelnen Sendemitteln 60.1, 60.2, 60.3 ausgesandten Strahlung S_{I} ist für die unterschiedlichen Wellenlängenbereiche WL₁, WL₂, WL₃ bzw. die zentralen Wellenlängen λ_{I1}, λ_{I2}, λ_{I3} untereinander unabhängig. Hierbei unterscheiden sich die Pulsfrequenzen 74 der einzelnen Wellenlängenbereiche WL₁, WL₂, WL₃ bzw. der Wellenlängen λ_{I1}, λ_{I2}, λ_{I3} um jeweils einen Faktor 2, wie beispielsweise eine Pulsfrequenz 74 von 10 kHz bei der Wellenlänge λ_{I1}, eine Pulsfrequenz von 20 kHz bei der Wellenlänge λ_{I2} und eine Pulsfrequenz von 40 kHz bei der Wellenlänge λ_{I3}. Ein Puls 74 weist eine Breite 78 von ca. 100 µs auf. Zudem ist es auch denkbar, dass ein bzw. mehrere Sendemittel 60.1, 60.2, 60.3 eine Strahlung S_{I} mit einer zeitlich konstanten Strahlungsintensität aussenden.

Das Prinzip der Anwesenheitserkennung von menschlichem Gewebe mittels der Auswertung eines Reflektionsspektrums der auf dem Untersuchungsgegenstand reflektierten Strahlung S_{R} im Reaktionsbereich 36 der Erkennungsvorrichtung 32 wird anhand der Figuren 9, 10 und 11 erläutert. Figur 9 zeigt das Reflektionsspektrum der auf das Untersuchungsobjekt 52 reflektierten und von den Sensormitteln 62.1, 62.2 erfassten Strahlung S_{R}. Dieses Reflektionsspektrum entspricht der Verteilung der Signalintensität in Abhängigkeit der Wellenlänge λ der Strahlung S_{R}. Die Sensormittel 62.1, 62.2 bzw. deren Empfindlichkeitsbereiche 64.1, 64.2 erfassen jeweils einen Teil des Reflektionsspektrums mit den entsprechenden Wellenlängenbereichen WL₁, WL₂, WL₃ der ausgesandten Strahlung S_{I}, wobei die Wellenlängenbereiche WL₁, WL₂, WL₃ aufgrund der Pulsung aus dem Reflektionsspektrum herausselektiert werden. Die Sensormittel 62.1, 62.2 erzeugen an deren Ausgangsklemme jeweils eine Reflexionskenngröße R_{I}, die jeweils als elektrische Spannung bzw. elektrischer Strom ausgebildet ist (Figur 10). Die Reflexionskenngröße R₁ beispielsweise ist proportional zu der über den Wellenlängenbereich WL₁ integrierten und in der Figur 9 schraffierten Signalintensität der Strahlung S_{R}.

Wie der Figur 10 entnommen werden kann, werden die Reflexionskenngrößen R_{I} auf einen Eingang eines Auswertemittels 80 der Erkennungsvorrichtung 32 gegeben. In einer weiteren Variante ist es auch denkbar, dass die Reflexionskenngrößen R_{I} verstärkt werden. Anhand der gepulsten, von der Sendeeinheit 48 ausgesandten Strahlung S_{I} ist innerhalb der Erkennungsvorrichtung 32, insbesondere in dem Auswertemittel 80, eine Zuordnung der sensierten Strahlung S_{R} in den einzelnen Wellenlängenbereichen WL₁, WL₂, WL₃ möglich. Hierbei kann das Auswertemittel 80 einen Synchrondemodulator und/oder eine weitere Schaltung zu einer Lock-In-Detektion aufweisen, durch die die Sendeeinheit 48 und die Sensoreinheit 50 verknüpft sind und damit eine Zuordnung einer empfangenen Strahlung S_{R} zu den einzelnen Wellenlängenbereichen WL₁, WL₂, WL₃ erfolgt. Es kann zudem insbesondere ein Signal/Rauschverhältnis erhöht werden. Aus der Reflexionskenngröße R_{I} wird in dem Auswertemittel 80 eine Strahlungskenngröße V_{I} gebildet, die jeweils einem der von der Sendeeinheit 48 ausgesandten Wellenlängenbereiche WL₁, WL₂, WL₃ zugeordnet ist. Bei einer Auswertung werden die Strahlungskenngrößen V_{I} mit Werten einer in einer Speichereinheit 82 der Erkennungsvorrichtung 32 gespeicherten Datenbank 84 mittels logischer Operationen verglichen. Diese Datenbank 84 ist in Figur 11 schematisch dargestellt. In einer ersten Auswertungsstrategie werden die erfassten Strahlungskenngrößen V_{I} mit gespeicherten Werten A₁, A₂, A₃ verglichen. Jedem Paar (V_{I}, A_{I}) ist eine Erkennungsvariable zugeordnet, die die Werte "False" (F) oder "True" (T) annehmen kann. Beim Wert "F" wird ein Vorhandensein von menschlichem Gewebe im Reaktionsbereich 36 ausgeschlossen. In einer zweiten, alternativen oder zusätzlichen Auswertungsstrategie werden durch das Auswertemittel 80 Verhältnisse V₁/V₂; V₁/V₃; V₂/V₃ zwischen den verschiedenen Strahlungskenngrößen V_{I} ermittelt. Diese Verhältnisse werden mit gespeicherten Werten A₁, A₂, A₃ usw. verglichen, wodurch, wie oben beschrieben, auf das Vorhandensein von menschlichem Gewebe im Reaktionsbereich 36 geschlossen werden kann. Durch die Bildung von Verhältnissen kann eine intensitätsunabhängige und insbesondere abstandsunabhängige Erkennung durchgeführt werden. In der Speichereinheit 82 können außerdem Informationen über die spektrale Empfindlichkeit der Sensormittel 62.1, 62.2 und die spektrale Strahlungscharakteristik der Sendeeinheit 60.1, 60.2, 60.3 gespeichert sein, die zur Auswertung der Strahlungskenngrößen V_{I} herangezogen werden können.

Die hier beschriebene Erkennungsvorrichtung 32 ist eine analoge Erkennungsvorrichtung, in welcher eine Erfassung bzw. eine Auswertung der reflektierten Strahlung S_{R} ausschließlich auf analoge Weise erfolgt. Ein kombinierter Einsatz von analogen und digitalen Signalverarbeitungsmitteln oder der ausschließliche Einsatz von digitalen Signalverarbeitungsmitteln ist in einer weiteren Ausführung der Erfindung ebenfalls möglich.

Des Weiteren werden von der Werkzeugmaschinenüberwachungsvorrichtung 30 eine oder mehrere Umgebungskenngrößen erfasst. Hierzu weist die Werkzeugmaschinenüberwachungsvorrichtung 30 nicht näher dargestellte Sensoren auf, wie beispielsweise einen Temperatursensor zur Erfassung einer Temperatur auf, so dass ein Temperaturdrift einzelner Bauteile der Erfassungsvorrichtung 32 und/oder des Auswertemittels 80 im Betrieb der Werkzeugmaschinenüberwachungsvorrichtung 30 kompensiert werden kann. Zudem kann die Werkzeugmaschinenüberwachungsvorrichtung 30 auch einen oder mehrere Sensoren zu einer Erfassung einer Strahlungsintensität einer Umgebung aufweisen, der besonders vorteilhaft im ultravioletten und/oder im sichtbaren und/oder im infraroten Bereich eines Spektrums elektromagnetischer Strahlung empfindlich ist. Hierbei kann mit Hilfe einer bekannten Umgebungsstrahlungsintensität die Erfassung und/oder die Auswertung der vom Material reflektierten Strahlung verbessert werden.

## Patentansprüche

1. Werkzeugmaschinenüberwachungsvorrichtung mit einer Erkennungsvorrichtung (32), die zur Anwesenheitserkennung einer Materialart, insbesondere von menschlichem Gewebe, in einem Werkzeugmaschinenarbeitsbereich (34) mittels spektraler Auswertung von Strahlung (S) vorgesehen ist, wobei die Erkennungsvorrichtung (32) eine Sensoreinheit (50) mit wenigstens einem Empfindlichkeitsbereich (64) zur Strahlungserfassung in einem Wellenlängenbereich (WL₂) aufweist, der zumindest teilweise im Infrarotspektrum (72) angeordnet ist, wobei die Erkennungsvorrichtung (32) eine Sendeeinheit (48) aufweist, die dazu vorgesehen ist, Strahlung mit zumindest einem Strahlungsanteil im Wellenlängenbereich WL₂ zu senden, **dadurch gekennzeichnet, dass** die Sendeeinheit (48) auch dazu vorgesehen ist, Strahlung zumindest eines Wellenlängenbereichs (WL₁, WL₂, WL₃, WL₄) gepulst auszusenden.

2. Werkzeugmaschinenüberwachungsvorrichtung nach Anspruch 1, **dadurch gekennzeichnet, dass** die Erkennungsvorrichtung (32) zur Anwesenheitserkennung mittels der Auswertung eines Reflektionsspektrums einer auf ein Untersuchungsobjekt reflektierten Strahlung (S_{R}) vorgesehen ist.

3. Werkzeugmaschinenüberwachungsvorrichtung nach Anspruch 1 oder 2, **dadurch gekennzeichnet, dass** der Wellenlängenbereich (WL₂) ein nahmittlerer Infrarotbereich, insbesondere ein Bereich zwischen ca. 700 nm und 3000 nm, ist.

4. Werkzeugmaschinenüberwachungsvorrichtung nach Anspruch 1, **dadurch gekennzeichnet, dass** die Sendeeinheit (48) dazu vorgesehen ist, Strahlung im Wellenlängenbereich (WL₂) und in zumindest einem weiteren Wellenlängenbereich (WL₁, WL₃, WL₄) zu senden.

5. Werkzeugmaschinenüberwachungsvorrichtung nach Anspruch 4 **dadurch gekennzeichnet, dass** die Strahlung des zumindest einem weiteren Wellenlängenbereichs (WL₁) im sichtbaren Spektralbereich (70) liegt.

6. Werkzeugmaschinenüberwachungsvorrichtung zumindest nach Anspruch 4, **dadurch gekennzeichnet, dass** die Strahlung des zumindest einem weiteren Wellenlängenbereichs (WL₁) im ultravioletten Spektralbereich (68) liegt.

7. Werkzeugmaschinenüberwachungsvorrichtung nach einem der vorhergehenden Ansprüche, **gekennzeichnet durch** eine Optikeinheit (54), die dazu vorgesehen ist, einen Reaktionsbereich (36) der Erkennungsvorrichtung (32) festzulegen.

8. Werkzeugmaschinenüberwachungsvorrichtung nach einem der vorhergehenden Ansprüche, **dadurch gekennzeichnet, dass** die Sensoreinheit (50) zumindest einen weiteren Empfindlichkeitsbereich (64) aufweist, der zur Strahlungserfassung in einem weiteren Wellenlängenbereich (WL₁) vorgesehen ist.

9. Werkzeugmaschinenüberwachungsvorrichtung nach einem der vorhergehenden Ansprüche, **dadurch gekennzeichnet, dass** die Erkennungsvorrichtung (32) ein Auswertemittel (80) aufweist, das dazu vorgesehen ist, das Vorhandensein der Materialart anhand eines Verhältnisses von zumindest zwei Strahlungskenngrößen (V₁, V₂, V₃) zu erkennen.

10. Werkzeugmaschinenüberwachungsvorrichtung nach Anspruch 9, **dadurch gekennzeichnet, dass** die zumindest zwei Strahlungskenngrößen (V₁, V₂, V₃) jeweils einem Strahlungsanteil in einem unterschiedlichen Wellenlängenbereich (WL₁, WL₂, WL₃) zugeordnet sind.

11. Werkzeugmaschinenüberwachungsvorrichtung nach einem der vorhergehenden Ansprüche, **dadurch gekennzeichnet, dass** zumindest ein Wellenlängenbereich (WL₁, WL₂, WL₃) schmalbandig ausgebildet ist.

12. Werkzeugmaschinenüberwachungsvorrichtung nach einem der vorhergehenden Ansprüche, **dadurch gekennzeichnet, dass** die Erkennungsvorrichtung (32) zumindest zwei Sendeeinheiten (48) und/oder zumindest zwei Empfangseinheiten (50) aufweist.

13. Werkzeugmaschine, insbesondere Schneid- oder Sägewerkzeugmaschine, mit einer Werkzeugmaschinenüberwachungsvorrichtung nach zumindest einem der vorhergehenden Ansprüche.

## Claims

1. Machine tool monitoring device having a detection apparatus (32) which is provided for detecting the presence of a type of material, in particular of human tissue, in a machine tool working area (34) by means of spectral evaluation of radiation (S), in which the detection apparatus (32) has a sensor unit (50) with at least one sensitivity region (64) for radiation detection in a wavelength region (WL₂) which is arranged at least partially in the infrared spectrum (72), in which the detection apparatus (32) has a transmission unit (48) which is provided in order to transmit radiation having at least one radiation fraction in the wavelength region WL₂, **characterized in that** the transmission unit (48) is also provided for the purpose of pulsed emission of radiation at least of one wavelength region (WL₁, WL₂, WL₃, WL₄).

2. Machine tool monitoring device according to Claim 1, **characterized in that** the detection apparatus (32) is provided for detecting presence by means of the evaluation of a reflection spectrum of a radiation (S_{R}) reflected onto a test object.

3. Machine tool monitoring device according to Claim 1 or 2, **characterized in that** the wavelength region (WL₂) is a near-mid infrared region, in particular a region between approximately 700 nm and 3000 nm.

4. Machine tool monitoring device according to Claim 1, **characterized in that** the transmission unit (48) is provided in order to transmit radiation in the wavelength region (WL₂) and in at least one further wavelength region (WL₁, WL₃, WL₄).

5. Machine tool monitoring device according to Claim 4, **characterized in that** the radiation of the at least one further wavelength region (WL₁) is in the visible spectral region (70).

6. Machine tool monitoring device at least according to Claim 4, **characterized in that** the radiation of the at least one further wavelength region (WL₁) is in the ultraviolet spectral region (68).

7. Machine tool monitoring device according to one of the preceding claims, **characterized by** an optical unit (54) which is provided in order to define a reaction region (36) of the detection apparatus (32).

8. Machine tool monitoring device according to one of the preceding claims, **characterized in that** the sensor unit (50) has at least one further sensitivity region (64) which is provided in order to detect radiation in a further wavelength region (WL₁).

9. Machine tool monitoring device according to one of the preceding claims, **characterized in that** the detection apparatus (32) has an evaluation means (80) which is provided for detecting the presence of the type of material with the aid of a ratio of at least two radiation characteristics (V₁, V₂, V₃).

10. Machine tool monitoring device according to Claim 9, **characterized in that** the at least two radiation characteristics (V₁, V₂, V₃) are respectively assigned to a radiation fraction in a different wavelength region (WL₁, WL₂, WL₃).

11. Machine tool monitoring device according to one of the preceding claims, **characterized in that** at least one wavelength region (WL₁, WL₂, WL₃) is of narrowband design.

12. Machine tool monitoring device according to one of the preceding claims, **characterized in that** the detection apparatus (32) has at least two transmission units (48) and/or at least two reception units (50).

13. Machine tool, in particular cutting or sawing machine tool, having a machine tool monitoring device according to at least one of the preceding claims.

## Revendications

1. Dispositif de surveillance de machine-outil doté d'un dispositif de détection (32) prévu pour détecter la présence d'un type de matériau, en particulier de tissu humain, dans une zone de travail (34) de la machine-outil par évaluation spectrale d'un rayonnement (S),
le dispositif de détection (32) présentant une unité de sonde (50) qui présente au moins une zone de sensibilité (64) de détection du rayonnement dans une plage (WL₂) de longueurs d'onde située au moins en partie dans le spectre infrarouge (72),
le dispositif de détection (32) présentant une unité d'émission (48) prévue pour envoyer le rayonnement dont au moins une partie est située dans la plage (WL₂) de longueurs d'onde,
**caractérisé en ce que**
l'unité d'émission (48) est prévue pour émettre également de manière pulsée un rayonnement dans au moins une plage (WL₁, WL₂, WL₃, WL₄) de longueurs d'onde.

2. Dispositif de surveillance de machine-outil selon la revendication 1, **caractérisé en ce que** le dispositif de détection (32) est prévu pour détecter la présence par évaluation du spectre de réflexion d'un rayonnement (S_{R}) réfléchi sur un objet étudié.

3. Dispositif de surveillance de machine-outil selon les revendications 1 ou 2, **caractérisé en ce que** la plage (WL₂) se longueur d'onde est située dans l'infrarouge proche et en particulier dans la plage comprise entre environ 700 nm et 3 000 nm.

4. Dispositif de surveillance de machine-outil selon la revendication 1, **caractérisé en ce que** l'unité d'émission (48) est prévue pour envoyer le rayonnement dans la plage (WL₂) de longueurs d'onde et dans au moins une autre plage (WL₁, WL₃, WL₄) de longueurs d'onde.

5. Dispositif de surveillance de machine-outil selon la revendication 4, **caractérisé en ce que** le rayonnement de la ou des autres plages (WL₁) de longueurs d'onde est situé dans la plage visible (70) du spectre.

6. Dispositif de surveillance de machine-outil selon au moins la revendication 4, **caractérisé en ce que** le rayonnement de la ou des autres plages (WL₁) de longueurs d'onde est situé dans la plage ultraviolette (68) du spectre.

7. Dispositif de surveillance de machine-outil selon l'une des revendications précédentes, **caractérisé par** une unité optique (54) prévue pour définir une zone de réaction (36) du dispositif de détection (32).

8. Dispositif de surveillance de machine-outil selon l'une des revendications précédentes, **caractérisé en ce que** l'unité de sonde (50) présente au moins une autre plage de sensibilité (64) prévue pour détecter le rayonnement dans une autre plage (WL₁) de longueurs d'onde.

9. Dispositif de surveillance de machine-outil selon l'une des revendications précédentes, **caractérisé en ce que** le dispositif de détection (32) présente un moyen d'évaluation (80) prévu pour détecter la présence du type de matériau sur base du rapport entre au moins deux grandeurs caractéristiques (V₁, V₂, V₃) du rayonnement.

10. Dispositif de surveillance de machine-outil selon la revendication 9, **caractérisé en ce que** chacune des deux ou plusieurs grandeurs caractéristiques (V₁, V₂, V₃) du rayonnement est associée à une fraction du rayonnement dans une plage différente (WL₁, WL₂, WL₃) de longueurs d'onde.

11. Dispositif de surveillance de machine-outil selon l'une des revendications précédentes, **caractérisé en ce qu'**au moins une plage (WL₁, WL₂, WL₃) de longueurs d'onde est une bande étroite.

12. Dispositif de surveillance de machine-outil selon l'une des revendications précédentes, **caractérisé en ce que** le dispositif de détection (32) présente au moins deux unités d'émission (48) et/ou au moins deux unités de réception (50).

13. Machine-outil, en particulier machine-outil de découpe ou de sciage, dotée d'un dispositif de surveillance de machine-outil selon au moins l'une des revendications précédentes.
